# EUROPEAN PATENT APPLICATION

(11) **EP 4 321 490 A1**
(43) Date of publication of application: **14.02.2024**
(21) Application number: 22190211.7
(22) Date of filing: 12.08.2022
(51) Int. Cl.: C02F 3/10, B01J 19/30, B01D 29/00, C02F 3/08

(54) **IMPROVEMENTS IN OR RELATING TO FILTER ELEMENTS FOR BIOLOGICAL FILTRATION ARRANGEMENTS**

(71) Applicant: Warden Plastics Limited, Luton, Bedforshire LU3 3HP (GB)
(72) Inventor: Barrett, Mark, Luton, LU3 3HP (GB)
(74) Representative: Brothers, Christopher Michael

(57) **Abstract**

A filter element suitable for use in wastewater treatment and comprising an inner cylindrical part, an inner ring part extending perpendicularly and radially outwardly from the inner cylindrical part at a mid-region thereof, an outer ring part substantially co-planar with the inner ring part, and a plurality of vanes extending outwardly from the inner cylindrical part substantially perpendicularly to the inner and outer ring parts, wherein the plurality of vanes have a curved outer edge and opposing curvilinearly shaped surfaces, wherein the filter element has a protected surface area of at least 94% of the total surface area.

## Description

This invention relates to filter elements for use with apparatus for and/or methods of facilitating biological filtration of wastewater containing biological waste materials.

It is well known to treat i.e., filter, water containing biological materials such as arises in relation to the management and disposal of waste biological materials arising from human activities, human food materials, animal food materials and general waste such as that commonly known as sewage material.

In relation to at least the initial stages of such treatment it is known to retain the material to be treated in settling containers/tanks within which the sewage material undergoes at least the initial stages of the breakdown of the biological material content by bacterial action. In practice, the bacteria involved require surfaces within the container/tank upon which to grow in order to be able to perform the required bacteriological filtering action. Such surfaces include the internal walls of the container/tank together with any other additional surfaces available within the container/tank. Conventionally such additional surfaces are provided by introducing into the container/tank a quantity of individual multi-faceted elements commonly termed filter elements, which can combine together as a static bed or, alternatively, the filter elements can be moved within the container/tank via air blown into the container/tank to keep the elements moving in a so-called dynamic bed, thus promoting live bacteria. The bacteria grow upon the surfaces inside the container/tank and the surfaces of the filter elements and biologically react with the waste material entrained within the water introduced into the container/tank in such manner as to remove the waste material from the water.

It will thus be appreciated that with the provision of such filter elements, the total surface area presented to the bacteria is many times greater than the actual surface area of the internal walls of any container/tank of the installation whereby the filtering capability of the installation is correspondingly increased.

In view of the purpose and function of the filtering installation and its filter elements, the contaminated water containing waste/sewage materials is conventionally continuously fed into the container/tank. This contaminated inlet water is intended to pass through the container/tank to a cleaned water outlet so located that water passing from the inlet to the outlet has to pass through the bed of filter elements. In practice, the bacteria 'feed' upon the waste material entrained in the flow of water thereby extracting the material from the water flow and in so doing multiply progressively to provide an increasing density of active bacteria for removing the waste material and thus increasing filtering capability in the installation. It is an object of the invention to provide an improved filter element construction providing an enhanced surface area available to bacteria.

It is also an object of the invention to provide an improved filter element construction that when in use it is capable of being randomly disposed within a filtering container/tank of a filtration plant.

According to a first aspect of the present invention, there is provided a filter element comprising an inner cylindrical part, an inner ring part extending perpendicularly and radially outwardly from the inner cylindrical part at a mid-region thereof, an outer ring part substantially co-planar with the inner ring part, and a plurality of vanes extending outwardly from the inner cylindrical part substantially perpendicularly to the inner and outer ring parts, wherein the plurality of vanes have a curved outer edge and opposing curvilinearly shaped surfaces, wherein the filter element has a protected surface area of at least 94% of the total surface area.

According to a second aspect of the present invention, there is provided a method of wastewater treatment utilising a plurality of the filter element.

Owing to these aspects, it is possible to provide a filter element with improved wastewater hydrodynamics.

A protected surface area is the measured surface area of the filter element that is protected from coming into contact with other filter elements and the internal surfaces of a container/tank in which the filter elements are operating, as opposed to a total surface area which is the measured surface area all surfaces, both internally and externally, of the element.

In order that the present invention can be clearly and completely disclosed, reference will now be made, by way of example only, to the accompanying drawings, in which:-
Figure 1 is a perspective view of a filter element,
Figure 2 is a plan view of the element,
Figure 3 is a side elevation of the filter element, and
Figure 4 is a cross-sectional view along the line IV-IV in Figure 2.

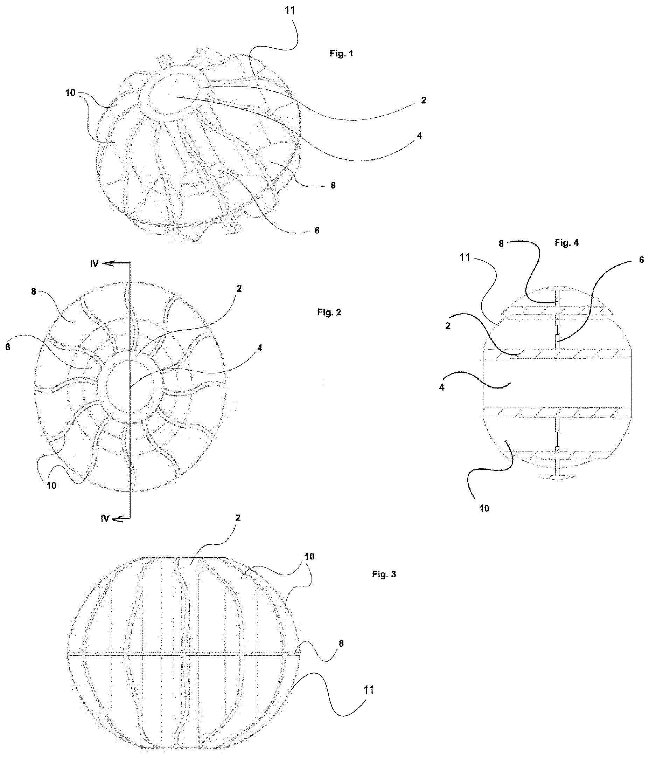

Referring to the Figures, a filter element comprises a roughly circular cylindrical part 2 at its core, the cylindrical part preferably being hollow with a central channel 4. Extending substantially perpendicularly outwardly from the cylindrical part 2 at a mid-region thereof is an inner ring part 6. Radially outwardly of the inner ring part 6 and spaced therefrom by a gap is an outer ring part 8 substantially co-planar with the inner ring part 6. The inner and outer ring parts 6 and 8 divide the filter element substantially in half. The width of the gap between the inner and outer ring parts 6 and 8 is substantially 3.5mm. The filter element further comprises a plurality of vanes 10 extending radially outwardly from the cylindrical part 2, each vane extending in a plane substantially perpendicular to the inner and outer ring parts 6 and 8 and extend through the gap between the inner and outer ring parts 6 and 8. The vanes 10, where connected to the cylindrical part 2 at their inner ends are substantially the same length as the cylindrical part which measurement gradually decreases along a curved path outwardly to an outer edge of the outer ring part 8 where the vanes 10 terminate. This results in a curved outer edge 11 of the vanes 10. The vanes 10 also have opposing curvilinearly shaped surfaces and are preferably serpentine or S-shaped in plan view (see Figure 2 in particular). Furthermore, the degree of curvature in each vane 10 at its inner end 10a proximal the cylindrical part 2 is less than a second curvature at it outer end distal the cylindrical part.

The exposed surfaces of the filter element may be uneven, or roughened, i.e. they are not smooth, even surfaces. Uneven surfaces protect bacteria growing on the individual elements. Such bacteria would therefore be protected from being detached from the element caused by collision against other elements and/or the internal surfaces of the tank. These areas of the filter element are defined as the protected surface area, i.e. the measured surface area that is protected from coming into contact with other filter elements and the internal surfaces of the tank, as opposed to a total surface area which is the measured surface area all surfaces, both internally and externally, of the element. The filter element of the Figures has a total surface area of around 3739mm² and a protected surface area of around 3529mm², which is in excess of 94% of the total surface area.

It is not merely surface area that is an important factor in the water treatment process. One other important factor is voidage, i.e. having sufficient void spaces within the confines of the filter element to allow sufficient flow of liquid through the filter element so that the liquid comes into contact with the bacteria on the various surfaces. Another important factor, in order to maintain a healthy and thin biofilm, is the relationship between the protected surface area and the void spaces to ensure the protected surface area is maximised in combination with a necessary voidage required.

The filter element is preferably made from a plastics material such as Polypropylene, or Polyethylene, for example, virgin or recycled Polypropylene, in a molding process. The plastics material advantageously has a specific gravity that is suitable for the particular water treatment application. Additives can be mixed with the plastics material to modify the specific gravity of the filter element to suit the particular water treatment application.

The filter element is designed to provide such a large protected surface area for a biofilm and optimal conditions for the bacteria culture when a plurality of the filter elements are suspended in water. The filter element of the Figures provides a durable, rugged and highly efficient media for attached growth biological processes such as moving bed biological reactors (MBBR), integrated fixed film activated sludge (IFAS) systems and submerged aerated filters (SAF).

The void spaces formed by the channel 4, the gap between the inner and outer ring parts and the spaces between the vanes 10 allow for wastewater to freely pass through the element with as little hindrance as possible from parts of the filter element to help maintain a healthy and thin biofilm. The void spaces account for substantially 80% of the total volumetric space of the filter element. Water containing material that it is to be removed by the filter elements is arranged to flow into a container/tank in such manner that in flowing from a water inlet into the container/tank towards a water outlet, the water is caused to flow through a bed of a plurality of the filter elements. The inlet water is to flow through the bed of filter elements and is effectively divided into a plurality of much reduced velocity flows by reason of the form of the filter elements producing channelling effects within the void spaces, so that the contaminated water passes relative to the various surfaces of the filter elements at much reduced rates of flow thereby increasing contact time between the material contained in the water and the surfaces of the filter elements forming the filtering bed.

The curvilinearly shaped vanes 10 enable relatively more movement and/or rotation of the filter element caused by the flow of wastewater and air bubbles within the wastewater thereby improving the mixing conditions. Rotation patterns of the moving elements are driven by the plurality of much reduced velocity wastewater flows mentioned above. The more the individual filter elements move around, the more the surfaces of the filter element are in contact with the wastewater and the serpentine shape of the vanes 10 enables the elements to move freely to improve the energy efficiency of the water treatment process. The process is made more energy efficient primarily through the reduction of energy consumed in operating pumps to make air bubbles in the water treatment tanks to circulate the filter elements within. This advantage also reduces the operating costs of a treatment plant.

The relationship between the void spaces together with the curved shape of the vanes 10 improves the wastewater hydrodynamics of the elements within the treatment container or tank owing to the way the individual elements move. In addition, an effective contact time between the wastewater and the elements within the time that it takes the wastewater in the treatment container or tank to flow from the inlet to the outlet is increased. When air for mixing is supplied into the treatment container or tank, the effective contact time is increased because:-
- the media is capable of retaining air bubbles for longer and thereby prolonging mixing conditions, and
- the interaction between the elements and the wastewater also prolongs the mixing conditions.
This increase in effective contact time enhances the growth of bacteria on the elements, improves the process performance and potentially decreases the costs of operation.

## Claims

1. A filter element comprising an inner cylindrical part, an inner ring part extending perpendicularly and radially outwardly from the inner cylindrical part at a mid-region thereof, an outer ring part substantially co-planar with the inner ring part, and a plurality of vanes extending outwardly from the inner cylindrical part substantially perpendicularly to the inner and outer ring parts, wherein the plurality of vanes have a curved outer edge and opposing curvilinearly shaped surfaces, wherein the filter element has a protected surface area of at least 94% of the total surface area.

2. A filter element according to claim 1, wherein the plurality of vanes at their inner ends are substantially the same length as the cylindrical part which measurement gradually decreases along a curved path outwardly to an outer edge of the outer ring part.

3. A filter element according to claim 1 or 2, wherein the vanes are serpentine or S-shaped in plan view.

4. A filter element according to claim 3, wherein the degree of curvature in each vane at its inner end proximal the cylindrical part is less than a second curvature at it outer end distal the cylindrical part.

5. A filter element according to any preceding claim, wherein exposed surfaces are uneven or roughened.

6. A filer element according to any preceding claim, and further comprising void spaces formed by a channel in the inner cylindrical part, the gap between the inner and outer ring parts and spaces between the vanes, the void spaces providing passages for wastewater to freely pass through the element.

7. A filter element according to claim 6, wherein the void spaces account for substantially 80% of the total volumetric space of the filter element.

8. A plurality of filter elements according to any preceding claim and forming a bed of the filter elements.

9. A method of wastewater treatment utilising a plurality of filter elements according to any preceding claim.

10. A method according to claim 9, wherein the plurality of filter elements is capable of retaining air bubbles in the treatment for longer, thereby prolonging mixing conditions.

11. A method according to claim 9 or 10, wherein an interaction between the plurality of filter elements and the wastewater prolongs mixing conditions.
